# EUROPÄISCHE PATENTANMELDUNG

(11) **EP 2 017 861 A2**
(43) Veröffentlichungstag der Anmeldung: **21.01.2009**
(21) Anmeldenummer: 08009334.7
(22) Anmeldetag: 21.05.2008
(51) Int. Cl.: H01F 37/00, H01F 27/42, H02J 3/01, H02M 1/12

(54) **Netzfilterdrossel**

(30) Priorität: 19.07.2007 DE 102007033556
(71) Anmelder: Robert Bosch GmbH, 70469 Stuttgart (DE)
(72) Erfinder: Donner, Roland, 97816 Lohr am Main (DE)
(74) Vertreter: Thürer, Andreas

(57) **Zusammenfassung**

Die Aufgabe der Erfindung ist es eine Schaltungsanordnung zu realisieren, welche im Nennbetrieb ohne Resonanz möglichst wenig Verlustleistung erzeugt, aber bei entsprechender Anregung eine überproportionale, asymmetrische Dämpfung bewirkt, so dass Resonanzen und damit verbundene Überspannungen vermieden werden.

Die Aufgabe wird gelöst durch Verwendung eines Dämpfungsliedes 5a,b,c, welches die Dämpfung nach Maßgabe einer Primärkreiskenngröße bewirkt.

Vorteil ist das adaptive Verhalten eines mit der erfindungsgemäßen Drossel ausgestatteten Netzfilters.

## Beschreibung

Die Erfindung beschreibt eine Netzfilterdrossel gemäß dem unabhängigen Anspruch. Derartige Drosseln kommen beim Betrieb von Geräten der Leistungselektronik wie Schaltnetzteilen, Servo-Antrieben, USV's zum Einsatz.

Ein Netzfilter begrenzt Störeinflusse, welche von elektronischen Geräten verursacht werden und in das öffentliche Stromversorgungsnetz einwirken (Funkentstörung). Ein Netzfilter verbessert auch die elektromagnetische Verträglichkeit elektrischer Geräte und erhöht damit die Störfestigkeit. Netzfilter mit erfindungsgemäßen Drosseln sind daher erforderlich, um die einschlägigen EMV - Vorschriften einzuhalten. Eine Gemeinsamkeit dieser Netzfilter ist es, dass sie Kapazitäten im Bereich von einigen Mikrofarad (Phase gemessen gegen Schutzleiter) aufweisen, welche asymmetrische Störungen von der Strangspannung des Netzes fernhalten sollen. Diese Kapazitäten bilden zusammen mit der Netzimpedanz einen mehr oder weniger bedämpften Schwingkreis, der bei Vorhandensein einer entsprechenden Anregung in Resonanz kommen kann. Die Folge sind hohe Ableitströme am Filtereingang sowie erhebliche Spannungen Phase - Erde mit entsprechender Frequenz, die sich der normalen Netzspannung überlagern und zu Zerstörungen der Komponenten führen können. Die Quellen der Anregungen sind dabei sehr vielfältig. Dies kann die am Netzfilter angeschlossene Leistungselektronik sein, deren Taktfrequenzen und zugehörige Oberwellen üblicherweise bis einige 10KHz heraufreichen oder aber auch Oberwellen, die ein vielfaches der Netzfrequenz sind und von völlig anderen Verbrauchern welche an anderer Stelle des Netzes angeschlossen sind, verursacht werden können. Das Spektrum der Anregungen erstreckt sich somit von wenigen hundert Hz bis hinauf zu einigen 10KHz.

Die Impedanz eines Versorgungsnetzes setzt sich zusammen aus einem komplexen System bestehend aus Einspeiseknoten, Leitungen, Transformatoren usw. welche im wesentlichen für einen induktiven Anteil sorgen, aber auch aus der Gesamtheit der Verbraucher, die zu einem bestimmten Zeitpunkt angeschlossen sind. Überwiegen ohmsche Verbraucher, so ist das Netz gut gedämpft und die Gefahr von Resonanzen geringer. Jede zusätzliche Last verringert die wirksame Netzimpedanz. Induktive Anteile der Impedanz werden im wesentlichen bestimmt durch die Streureaktanzen von Transformatoren und die Leitungslängen (Entfernung von Einspeise-Punkten), aber auch von induktiven Verbrauchern wie Drehstrommotoren. In Netzen mit großen räumlichen Ausdehnungen, wie sie beispielsweise in Nordamerika und China vorkommen, sind höhere induktive Anteile als in Europa die Regel. Die Impedanz eines Netzes lässt sich somit nicht vorhersagen. Sie ist abhängig vom Schaltzustand und der jeweiligen Lastsituation und daher auch zeitlich veränderlich.

Unter Berücksichtigung der bereits gemachten Aussagen wird deutlich, dass es ein relativ hohes, aber auch schwer vorhersagbares Risiko für Resonanzen gibt. Selbst wenn es sich um ein stabiles und relativ gut gedämpftes Netz handelt, kann es zu Resonanzen kommen, wenn ein leistungselektronischer Verbraucher zusammen mit kapazitiver Last an einer längeren, verlustarmen, also mit ausreichend großem Querschnitt bemessenen Zuleitung, betrieben wird. Handelt es sich um ein größeres leistungselektronisches System mit vielen Netzfiltern, beispielsweise ein Antriebssystem für eine Druckmaschine, so genügen bereits 20 - 30 m Meter Zuleitung, um die Resonanzfrequenz in einen kritischen Bereich zu rücken.

Bedingt durch den in der Leistungselektronik etablierten und gepulsten Betrieb kommt es durch die in jedem System vorhandenen parasitären Kapazitäten gegen Erde (z. B bei geschirmtem Motorleitungen, Leiter gegen Schirm) zu Ableitströmen, die zu einem großen Teil über die in den Netzfiltern vorhandenen Kondensatoren (Phase - Erde) zurückfließen und somit den größten Anteil der Anregungen darstellen. Es handelt sich hierbei also um eine asymmetrische Anregung. Prinzipiell ist auch eine symmetrische Anregung (also Phase - Phase) denkbar, allerdings ist die Wahrscheinlichkeit einer Resonanz in diesem Falle erheblich geringer, da die dem Netzfilter nachgeschalteten Verbraucher üblicherweise für ausreichende symmetrische Dämpfung sorgen.

Um für eine asymmetrische Dämpfung zu sorgen, schalten manche Netzfilter-Hersteller niederohmige Widerstände parallel zu den Kondensatoren, was aber bereits im Nennbetrieb zu entsprechender Verlustleistung führt. Auch ist nicht sicher gestellt, dass die Dämpfung bei stärkerer Anregung noch ausreicht, um Resonanzen zu unterdrücken. Ein Einfügen von Widerständen in die Zuleitung scheidet wegen der damit verbundenen enormen Verlustleistung aus.

Das veröffentlichte Gebrauchsmuster DE 295 06 951 U1 zeigt den Aufbau eines Netzfilter mit Dämpfungsübertrager in Form einer Drossel für Netzfilter mit einer Primärwicklung zum Anschluss der Drossel an die Netzphasen L1 bis L3 und mit einer Sekundärwicklung mit Sekundärkreis, wobei die Primärwicklung und Sekundärwicklung an einem Wicklungskern angeordnet sind und der Sekundärkreis ein Dämpfungsglied in Form einer ohmschen Last umfasst, welches mittels der Drossel eine Dämpfung im Primärkreis bewirkt. Die ohmsche Last wird aufgrund der transformatorischen Wirkung der Anordnung in den Primärkreis transformiert und dämpft diesen permanent. Der Nachteil der Anordnung liegt einerseits in dieser permanenten Dämpfung des Primärkreises und andererseits in der Verwendung des Materials Ferrit für den Drosselspulenkern. Ferrit hat den Nachteil, dass die Permeabilität stark temperaturabhängig ist und die Sättigungsinduktion nur etwa 400 mT beträgt. Auch liegen die Curie-Temperaturen so tief, dass sie bei einem Einsatz für eine Dämpfungsdrossel, wo absichtlich bei Bedarf hohe Verluste entstehen sollen, leicht erreicht werden können. Ferritringkerne sind zudem nur bis zu einer bestimmten Größe wirtschaftlich herstellbar, da die Bruchgefahr bei der Produktion mit zunehmender Größe stark ansteigt, was zu geringer Ausbeute und dementsprechend hohen Preisen führt. Eine eventuelle Überlast kann zudem nicht detektiert werden. Mit der aus dem Stand der Technik bekannten Drossel sollen lediglich die leitungsgebundenen Störungen, verursacht durch die Leistungselektronik, reduziert werden und zwar auch dadurch, dass die Resonanzstellen in einen tiefer liegenden und für die EMV-Betrachtung nicht relevanten Frequenzbereich verschoben werden.

Die Aufgabe der Erfindung besteht darin, eine Schaltungsanordnung zu realisieren, welche im Nennbetrieb möglichst wenig Verlustleistung erzeugt und eine überproportionale, asymmetrische Dämpfung bewirkt, so dass Resonanzen an denen die Netzimpedanz beteiligt ist und damit verbundene Überspannungen vermieden werden.

Die Erfindung löst diese Aufgabe mittels einer Drossel gemäß dem Oberbegriff des unabhängigen Anspruches, wobei das verwendete Dämpfungslied Mittel umfasst, welche die Dämpfung nach Maßgabe einer Primärkreiskenngröße bewirken, wobei es sich bei der Primärkreiskenngröße insbesondere um die Primärkreisspannung oder den Primärkreisstrom oder die Primärkreisfrequenz handelt. Hierdurch wird die permanente Entstehung von Verlustleistung vermieden und die Dämpfung kann adaptiv und abhängig von den Primärkreiskenngrößen erfolgen. Die Dämpfung wird daher dynamisch an die örtlichen und wechselnden Gegebenheiten angepasst und ist im Gegenteil zum weiter oben genannten Stand der Technik nicht statisch und dauerhaft verlustbehaftet. Dieser Vorteil wird unter anderem auch dadurch bewirkt, dass die Mittel derart ausgebildet sind, dass sie eine proportional zur Intensität der für die Dämpfung maßgeblichen Primärkreiskenngröße abhängige Dämpfungsintensität bewirken.
Bevorzugt bewirken die Mittel eine Dämpfungsintensität nach Maßgabe der magnetischen Sättigung des Wicklungskernmateriales, um eine Übersättigung zu vermeiden.

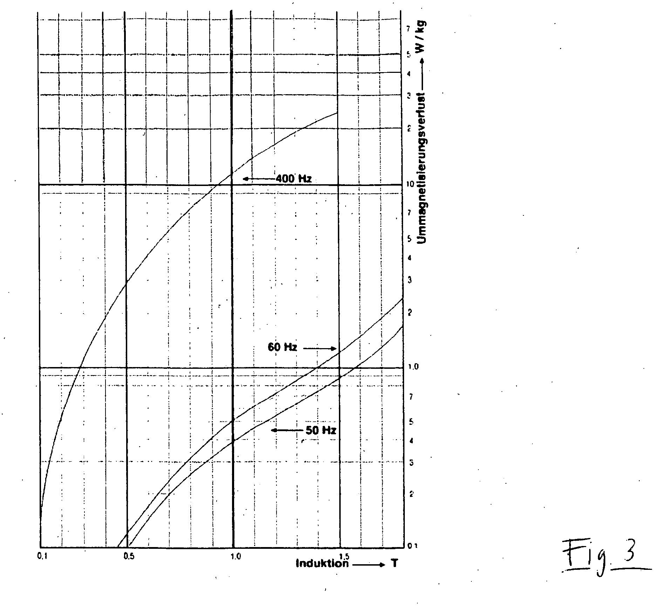

Besonders bevorzugt umfasst der Wicklungskern Silizium-Eisen und ist insbesondere mittels Blechen aus kornorientiertem zuvor genanntem Material realisiert. Dieser wird vor das Netzfilter geschaltet und so betrieben, dass er im Nennbetrieb ohne Anregung geringfügig ausgesteuert wird, beispielsweise mit Werten um 150 mT. Wie in Figur 3 gezeigt ist, sind die Kernverluste bei dieser Aussteuerung noch sehr gering. Mit steigender Aussteuerung und Frequenz steigen die Verluste an und sorgen so für eine entsprechende Dämpfung dieser Frequenzanteile. Ringbandkerne aus SiFe-Blech als gemeinsamer Wicklungskern sind mit beliebigen Abmessungen preisgünstig herstellbar, so dass sie auch für Anwendungen mit hohen Strömen, wo große Leitungsquerschnitte erforderlich sind, zur Verfügung stehen. Des weiteren besitzt das Kernmaterial einen hohen Aussteuerbereich (bis 2 Tesla) und die Curie-Temperatur liegt bei über 600°C. Die gegenüber Ferrit höheren Kernverluste sind bei dieser Anwendung erwünscht und sogar erforderlich.

Ganz besonders bevorzugt ist das Dämpfungsglied derart ausgebildet, dass es vorzugsweise abhängig vom Primärkreiszustand eine oder beide Halbwellen der Primärkreisspannung oder des Primärkreisstromes beeinflusst. Die Intensität kann damit zusätzlich gesteigert oder abgeschwächt werden.

Vorteilhafterweise umfasst das Dämpfungsglied ein Schaltmittel, welches derart ausgebildet ist, dass es vorzugsweise abhängig vom Primärkreiszustand Zeitpunkt oder Intensität der Dämpfung steuert. Die Erfindung ist damit weltweit für viele Netze adaptierbar.

Zur vorteilhaften Anwendung der Erfindung in einem Dreiphasennetz umfasst die Drossel für den Primärkreis drei Primärwicklungen zum Anschluss an ein Dreiphasennetz und für den Sekundärkreis eine vierte Wicklung, wobei Primärkreiswicklungen und Sekundärkreiswicklung an einem gemeinsamen Wicklungskern angeordnet sind. Auch Zwei- oder Vierphasennetze kommen in Frage.

Zur Erhöhung der Sicherheit ist ein Schaltmittel vorgesehen und von der Drossel umfasst, welches derart angeordnet ist, dass nach Maßgabe einer Primärkreiskenngröße der Primärkreis vom Netz trennbar ist. Sollte die wählbare Dämpfung für die sich ändernden Primärkreiskenngrößen nicht mehr ausreichen, so kann das Netz zur Vermeidung von Fehlfunktionen an der angeschlossenen Peripherie abgeschaltet werden. Beispielsweise kann ein Thermoschalter vorgesehen werden, der bei Überlast, welche sich durch Überschreitung bestimmter Temperaturen am Lastwiderstand bemerkbar macht, öffnet und somit ein Signal erzeugt, welches z. B. für das Stillsetzen der Anlage verwendet werden kann.

Die Drossel wird bevorzugt in einem Netzfilter eingesetzt. Das Netzfilter ist bevorzugt Bestandteil einer elektrischen Apparatur, insbesondere eines elektrischen Antriebes.

Weitere vorteilhafte Ausgestaltungen der Erfindung ergeben sich aus dem nachfolgend beschriebenen Anwendungsbeispiel.

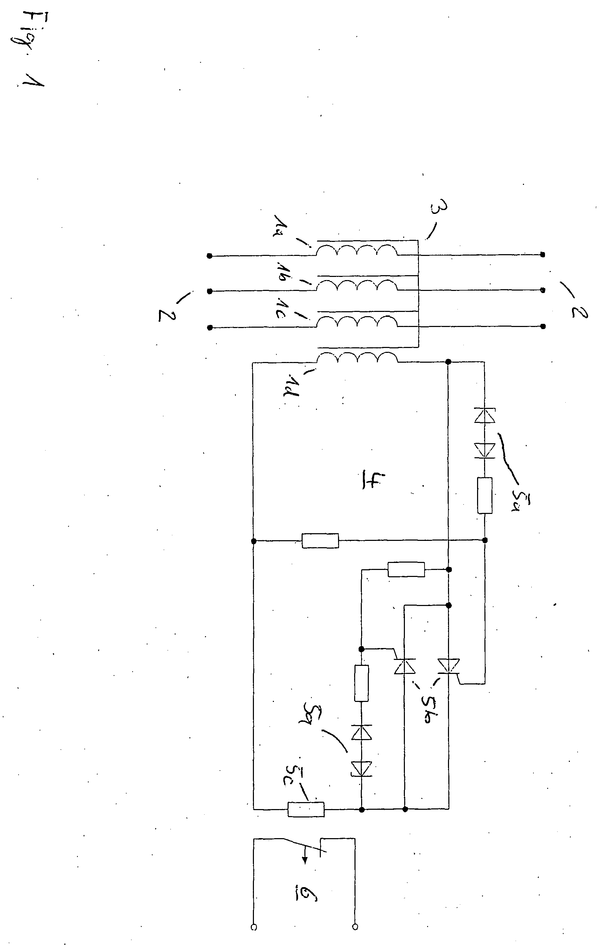

Figur 1 zeigt den Ausschnitt eines 3-phasigen Netzfilters mit erfindungsgemäßer Netzdrossel. Selbstverständlich ist das zugrundeliegende Konzept für Netzfilter mit beliebiger Phasenanzahl geeignet.

Im Detail ist gezeigt die Primärwicklung 1 a,b,c der Drossel zum Anschluss der Drossel an den Primärkreis 2 und die Sekundärwicklung 1d mit Sekundärkreis 4, wobei die Primärwicklung 1a,b,c und Sekundärwicklung 1 d an einem gemeinsamen Wicklungskern 3 aus kornorientiertem SiFe-Blech angeordnet sind und der Sekundärkreis 4 ein Dämpfungsglied 5a,b,c umfasst, welches geeignet ist mittels der Drossel eine Dämpfung im Primärkreis 2 zu bewirken. Das Dämpfungslied umfasst als wesentliche Bestandteile Spannungsniveauermittler 5a für die Primärkreisspannung und elektrisch ansteuerbare Schaltmittel 5b und einen ohmschen Verbraucher 5c als Last. In unmittelbarer Nähe der Last ist ein Thermoschalter 6 angeordnet, welcher mittelbar aufgrund der Temperatur des Lastwiderstandes 5c auf Spannungs- oder Stromspitzen im Primärkreis ansprechen kann. Die restlichen Bauteile dienen der Schaltungsdimensionierung und Arbeitspunkteinstellung. Die Mittel 5a,b,c können demnach die Dämpfung nach Maßgabe einer Primärkreiskenngröße bewirken.

Steigt die Anregung und damit der Ableitstrom, so steigt auch die in der Wicklung 1d induzierte Spannung. Erreicht sie ein bestimmtes Niveau, welches durch die Z-Dioden 5a bestimmt ist, zünden die Thyristoren 5b und der Lastwiderstand 5c wird an die Wicklung 1d gelegt, wodurch er transformatorisch auf die Primärseite 2 gekoppelt wird und so für eine Dämpfung sorgt. Es ist durchaus angedacht für die beiden Z-Dioden 5a unterschiedliche Spannungen zu wählen, so dass zunächst nur ein Thyristor zündet und somit zunächst eine Halbwelle wirksam wird. Erst bei weiterem Anstieg der Spannung an Wicklung 1d zündet der zweite Thyristor mittels der zweiten Z-Diode, so dass die zweite Halbwelle ebenfalls berücksichtigt wird. Somit ist es möglich die Halbwellen selektiv und Primärkreisabhängig zu dämpfen.

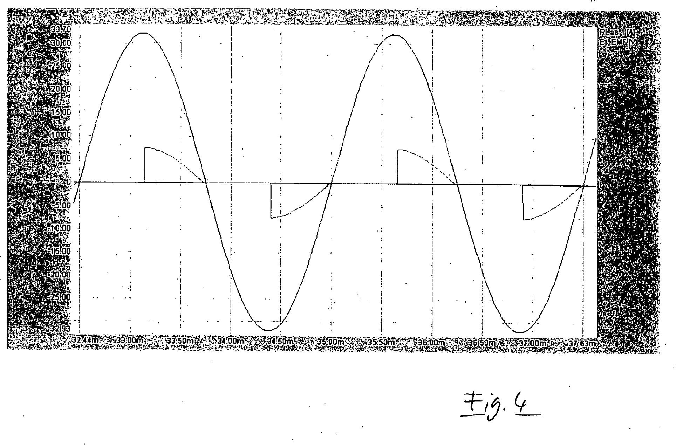

Die Intensität der Dämpfung nimmt mit steigender Anregung nach dem Zünden der Thyristoren weiter kontinuierlich zu. Dies wird bewirkt mittels der durch die Z-Dioden vorgegebenen festen Einschaltschwellen. Hat die Spannung an Wicklung 1d einen Wert erreicht, der die Thyristoren gerade Zünden lässt, so stellt sich ein Phasenanschnitt oder auch Zündwinkel von etwa 90° ein. Dies wird in Figur 4 deutlich.

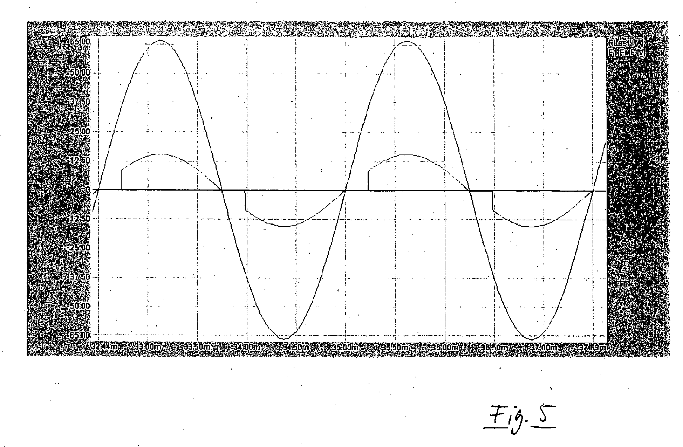

Wird die Spitzenspannung an Wicklung 1d beispielsweise von ca. 30 Volt auf 60 Volt verdoppelt, verbleibt ein geringerer Zündwinkel, wodurch sich die Wirkung des auf die Primärseite gekoppelten ohmschen Anteils verstärkt, siehe Figur 5.

Im Rahmen der Erfindung legt man die Zündschwelle für die Thyristoren auf ein solches Niveau, dass eine Sättigung des Ringbandkernes vermieden wird und er somit magnetisch stets wirksam bleibt. Wegen der der hohen Sättigungsinduktion des vorgesehenen Kernmaterials, ergibt sich ein weiter Aussteuerbereich, bevor der Thyristorsteller aktiv werden muss.

Der Lastwiderstand 5c umfasst hier den Thermoschalter 6. Sollte eine hohe Anregung über einen längeren Zeitraum anstehen, was zu einer Überlastung des Widerstandes 5c oder anderer Anlagenteile führen könnte, so öffnet dieser Schalter 6 und liefert damit ein Signal, mit dem die Anlage geregelt stillgesetzt und vom Netz getrennt werden kann, noch bevor es zu Schäden an Anlage oder Peripherie kommt.

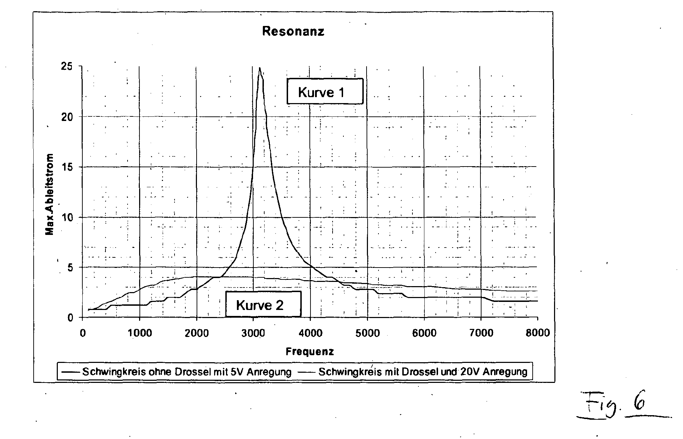

Figur 6 zeigt die Verhältnisse, welche am Netzanschluss einer realen Anlage mit Netzfilter gemessen wurden. Mit der erfindungsgemäßen Drossel ist selbst bei 4-fach größerer Anregung keine nennenswerte Resonanzüberhöhung mehr feststellbar (Kurve 2) gegenüber einer Lösung ohne erfindungsgemäße Schaltung (Kurve 1 mit Resonanzfrequenz um 3000 Hz). Die Kurve 1 (ohne Drossel) entstand bei einer Anregung mit 5 Volt, die Kurve 2 (mit Drossel) entstand bei einer Anregung mit 20 Volt.

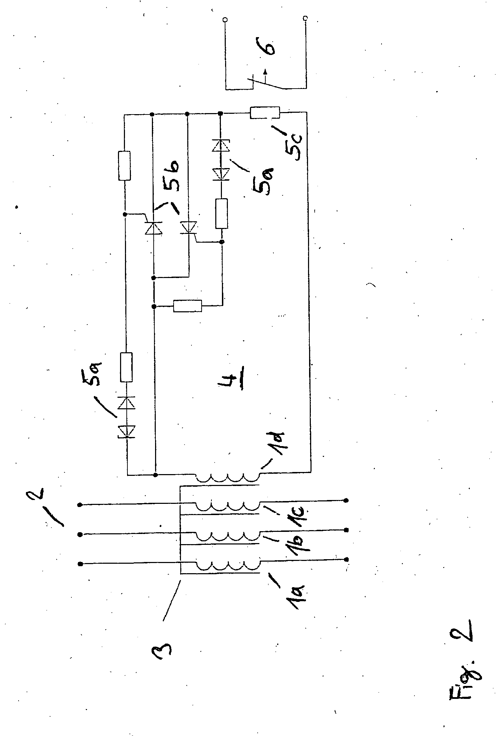

Figur 2 zeigt eine alternative Ausführung der Schaltung aus Figur 1 mit vergleichbarer Wirkung. Mit Figur 1 identische Bezugszeichen haben identische Bedeutung. Diese Lösung hat gegenüber der in Figur 1 gezeigten Lösung den Vorteil, dass am Gate - Widerstand des Thyristors im oberen Zweig, unabhängig von der Ausgangsspannung an der Wicklung 1d, nur eine begrenzte Verlustleistung anfällt, da sich der den Spannungsabfall am Lastwiderstand 5c kaum mehr am Gate bemerkbar macht. Der Gate - Widerstand des Thyristors im darunterliegenden Zweig ist bereits in der gleichen Weise angeschlossen, so dass die Schaltung nun symmetrisch aufgebaut ist. Die grundsätzliche Funktion ist jedoch bei beiden Schaltungsvarianten (Figur 1 und 2) weitestgehend identisch.

## Patentansprüche

1. Drossel für Netzfilter mit Primärwicklung (1a,b,c) zum Anschluss der Drossel an einen Primärkreis (2) und Sekundärwicklung (1d) mit Sekundärkreis (4), wobei die Primärwicklung (1a,b,c) und Sekundärwicklung (1d) an einem Wicklungskern (3) angeordnet sind und der Sekundärkreis (4) ein Dämpfungsglied (5a,b,c) umfasst, welches mittels der Drossel eine Dämpfung im Primärkreis (2) bewirkt, **dadurch gekennzeichnet, dass**
das Dämpfungslied (5a,b,c) Mittel umfasst, welche die Dämpfung nach Maßgabe einer Primärkreiskenngröße bewirken, wobei es sich bei der Primärkreiskenngröße insbesondere um die Primärkreisspannung oder den Primärkreisstrom oder die Primärkreisfrequenz handelt.

2. Drossel nach Anspruch 1, wobei die Mittel (5a,b,c) derart ausgebildet sind, dass sie eine proportional zur Intensität der für die Dämpfung maßgeblichen Primärkreiskenngröße abhängige Dämpfungsintensität bewirken.

3. Drossel nach einem der vorhergehenden Ansprüche, wobei die Mittel (5a,b,c) die Dämpfungsintensität nach Maßgabe der magnetischen Sättigung des Materials des Wicklungskerns (3) bewirken.

4. Drossel nach einem der vorhergehenden Ansprüche, wobei der Wicklungskern (3) Silizium-Eisen umfasst und insbesondere mittels Blechen aus kornorientiertem Silizium-Eisen realisiert ist.

5. Drossel nach einem der vorhergehenden Ansprüche, wobei das Dämpfungsglied (5a,b,c) derart ausgebildet ist, dass es eine Beeinflussung einer oder beider Halbwellen der Primärkreisspannung oder des Primärkreisstromes bewirkt.

6. Drossel nach einem der vorhergehenden Ansprüche, wobei das Dämpfungsglied (5a,b,c) ein Schaltmittel (5b) umfasst welches derart ausgebildet ist, dass es Zeitpunkt oder Intensität der Dämpfung steuert.

7. Drossel nach einem der vorherigen Ansprüche, wobei für den Primärkreis (2) drei Primärwicklungen (1a,b,c) zum Anschluss an ein Dreiphasennetz (2) vorgesehen sind und für den Sekundärkreis (4) eine vierte Wicklung (1d) vorgesehen ist, wobei Primärkreiswicklungen (1a,b,c) und Sekundärkreiswicklung (1d) an einem gemeinsamen Wicklungskern (3) angeordnet sind.

8. Drossel nach einem der vorherigen Ansprüche, wobei ein Schaltmittel (6) von der Drossel umfasst ist und derart angeordnet ist, dass nach Maßgabe einer Primärkreiskenngröße der Primärkreis (2) vom Netz trennbar ist.

9. Netzfilter mit Drossel nach einem der vorhergehenden Ansprüche.

10. Elektrische Apparatur, insbesondere elektrischer Antrieb, mit Netzfilter nach Anspruch 9.
